# EUROPEAN PATENT APPLICATION

(11) **EP 4 163 606 A1**
(43) Date of publication of application: **12.04.2023**
(21) Application number: 22182304.0
(22) Date of filing: 30.06.2022
(51) Int. Cl.: G01G 19/393

(54) **COMBINATION WEIGHING DEVICE**

(30) Priority: 05.10.2021 JP 2021163979
(71) Applicant: ISHIDA CO., Ltd., Kyoto-shi, Kyoto 606-8392 (JP)
(72) Inventor: KAMIGAITO, Satoru, Shiga, 520-3026 (JP); FURUKAWA, Takuma, Shiga, 520-3026 (JP)
(74) Representative: Gill Jennings & Every LLP

(57) **Abstract**

A combination weighing device 1 includes a plurality of weighing hoppers 6, a weighing unit 11, and a controller 20. After the articles M stored in a zero point hopper set as a target of zero point adjustment among the plurality of weighing hoppers 6 are discharged by opening and closing a gate 62 of the zero point hopper, when a weight value of the zero point hopper acquired in a state where supply of articles M to the zero point hopper is prohibited is within a preset allowable range, the controller 20 stores the weight value of the zero point hopper as a zero point, and when the weight value of the zero point hopper exceeds the allowable range, the controller 20 shifts to a determination operation mode for determining a cause of the articles M not being discharged from the zero point hopper.

## Description

### TECHNICAL FIELD

An aspect of the present invention relates to a combination weighing device.

### BACKGROUND

A combination weighing device includes a plurality of hoppers each for storing a supplied article with a gate in a temporarily closed state and then discharging the article in an open state of the gate, an acquisition unit that acquires a weight value of the hopper, and a controller that calculates a combination for a preset target weight value based on a weight value related to an article in respective weight values of the plurality of hoppers acquired by the acquisition unit.

In such a combination weighing device, for example, if a target weight value is relatively large with respect to the capacity of the hopper, even when the gate is opened and closed at a standard opening/closing time, the article may remain without being discharged from the hopper, so that weighing accuracy may decrease. In this regard, in a combination scale described in Japanese Patent No. 3845019, in a test mode of a device (when not in operation), a process in which, articles having a predetermined mass is supplied to one hopper and discharged, a gate opening/closing time is increased when an article remains in the hopper after discharge, and the gate opening/closing time is decreased when no article remains, is repeated to adjust the gate opening/closing time.

However, when an article adheres to the inside of the hopper, the combination weighing device may have an excessively short gate opening/closing time, and the gate opening/closing time may not be adjusted to an appropriate value. Therefore, when the article is not discharged from the hopper, it is desirable to detect a cause instead of immediately adjusting the gate opening/closing time. Further, in the combination weighing device, since the gate opening/closing time is adjusted in the test mode carried out separately from a normal operation time, there is trouble of having to prepare test articles and supply the test articles to each hopper by a predetermined amount to perform test operation.

### SUMMARY

Therefore, an aspect of the invention is to provide a combination weighing device capable of detecting a reason why an article is not discharged from a hopper during normal operation without switching to a test mode.

A combination weighing device according to an aspect of the invention includes a plurality of hoppers each configured to store supplied articles with a gate in a temporarily closed state and then discharge the articles with the gate open, an acquisition unit configured to acquire weight values of the hoppers, and a controller configured to calculate a combination for a preset target weight value based on weight values related to the articles in respective weight values of the plurality of hoppers acquired by the acquisition unit, in which, after the articles stored in a zero point hopper set as a target of zero point adjustment among the plurality of hoppers are discharged by opening and closing the gate, when a weight value of the zero point hopper acquired in a state where supply of articles to the zero point hopper is prohibited is within a preset allowable range, the controller stores the weight value of the zero point hopper as a zero point, and when the weight value of the zero point hopper exceeds the allowable range, the controller shifts to a determination operation mode for determining a cause of the articles not being discharged from the zero point hopper.

In this combination weighing device, it is possible to use zero point adjustment performed during normal operation in order to adjust the zero point of the weight value of the hopper, and to investigate a cause when the articles remain in the hopper. That is, when the weight value of the zero point hopper after opening and closing the gate is within the allowable range, zero point adjustment is performed using the weight value as a zero point. However, if not (when the articles remain in the zero point hopper), it is possible to shift to the determination operation mode and determine a cause of the articles not being discharged from the zero point hopper. Therefore, it is possible to detect a reason why the articles are not discharged from the hopper without switching to a test mode. For example, it is possible to adjust the device to an appropriate state, for example, the opening/closing time of the hopper to an appropriate value based on the detected reason.

In the combination weighing device according to the aspect of the invention, when the weight value of the zero point hopper falls within the allowable range by further opening and closing the gate one or more times in the determination operation mode, the controller may determine that an opening/closing time of the gate is inappropriate. In this case, since it is estimated that all the articles in the zero point hopper are discharged by further opening and closing the gate, it is possible to detect that the opening/closing time of the gate is inappropriate as the reason why the articles are not discharged from the hopper. A reason therefor is that, when the opening/closing time of the gate is short with respect to the capacity of the articles occupied in the hopper, if the gate of the hopper is further opened/closed, all the articles in the hopper are discharged.

In the combination weighing device according to the aspect of the invention, the controller may store the weight value of the zero point hopper after further opening/closing the gate when it is determined that the opening/closing time of the gate is inappropriate in the determination operation mode, and adjust the opening/closing time of the gate based on stored weight values of a plurality of zero point hoppers. As a result, it is possible to adjust the opening/closing time of the gate after determining how many articles are discharged from the zero point hopper each time by opening/closing of the gate.

In the combination weighing device according to the aspect of the invention, when the number of weight values of zero point hoppers exceeding the allowable range among weight values of a stipulated number of zero point hoppers most recently stored is greater than or equal to a predetermined ratio, the controller increases a time of an open state in opening and closing of the gate. In this case, it is possible to adjust the opening/closing time of the gate so that the articles are reliably discharged from the hopper.

The combination weighing device according to the aspect of the invention may include a supply hopper configured to store the articles with a supply gate in a temporarily closed state and then supply the articles to the zero point hopper with the supply gate open, in which, when a time of an open state in opening and closing of the gate of the zero point hopper is increased, the controller may increase a time of an open state in opening and closing of the supply gate of the supply hopper. As a result, it is possible to adjust the opening/closing time of the supply gate so that the articles are reliably discharged from the supply hopper.

In the combination weighing device according to the aspect of the invention, when the weight value of the zero point hopper does not fall within the allowable range even when the gate is further opened and closed a predetermined number of times in the determination operation mode, the controller may determine that the articles are attached to the zero point hopper. As a result, it is possible to detect attachment of the articles to the hopper as a cause of the articles not being discharged from the hopper. A reason therefor is that, when the articles are attached to the hopper, even if the gate of the hopper is opened and closed a predetermined number of times, the attached articles are difficult to be discharged from the hopper.

In the combination weighing device according to the aspect of the invention, when the number of weight values of zero point hoppers exceeding the allowable range among the weight values of the stipulated number of zero point hoppers most recently stored is 0, the controller may decrease a time of an open state in opening and closing of the gate. In this case, even though the weight value of the zero point hopper before discharging the articles is various in size, all the articles are discharged in a time of an open state of the hopper at that time. Thus, even when an opening time thereof is decreased, the opening/closing time of the gate can be decreased by presuming that the articles do not remain in the zero point hopper.

In the combination weighing device according to the aspect of the invention, the controller may be configured so that at least a first mode and a second mode are selectable as a functional mode for adjusting the opening/closing time of the gate, and prohibit decreasing a time of an open state in opening and closing of the gate when the first mode is selected, and allow decreasing a time of an open state in opening and closing of the gate when the second mode is selected. As a result, it is possible to selectively perform a control operation in which only increasing a time of an open state of the gate is allowed and a control operation in which increasing and decreasing the time of the open state of the gate are allowed.

### BRIEF DESCRIPTION OF THE DRAWINGS

FIG. 1 is a schematic configuration diagram of a combination weighing device according to an embodiment.
FIG. 2 is a diagram illustrating a functional configuration of a controller of FIG. 1.
FIG. 3 is a flowchart illustrating a process by a zero point adjustment unit of FIG. 2.
FIG. 4 is a flowchart illustrating a process by a determination operation mode execution unit of FIG. 2.
FIG. 5 is a flowchart illustrating a process by a gate opening/closing time adjustment unit of FIG. 2.

### DETAILED DESCRIPTION

Hereinafter, embodiments will be described in detail with reference to the drawings. Note that in each figure, the same or corresponding parts are designated by the same reference symbols, and duplicate description will be omitted.

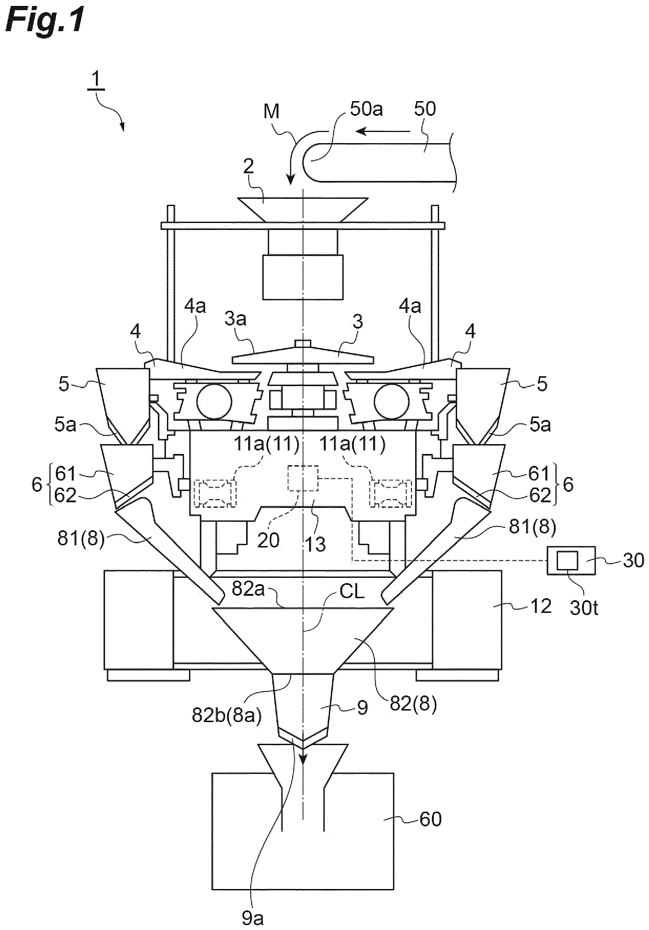

FIG. 1 is a schematic configuration diagram of a combination weighing device 1 according to the present embodiment. As illustrated in FIG. 1, the combination weighing device 1 includes a charge chute 2, a dispersion feeder 3, a plurality of radiation feeders 4, a plurality of pool hoppers (supply hoppers) 5, a plurality of weighing hoppers (hoppers) 6, a collecting chute 8, a timing hopper 9, a weighing unit (acquisition unit) 11, a controller 20, and an interface 30. The combination weighing device 1 repeats a cycle of supplying articles M to the plurality of weighing hoppers 6, weighing the articles M, obtaining a combination of the plurality of weighing hoppers 6 based on an obtained weighing value of each article of the plurality of weighing hoppers 6, selecting a combination of articles M close to a target weight value from obtained combinations, and discharging articles from a plurality of weighing hoppers 6 related to the selected combination.

The combination weighing device 1 weighs the articles M supplied by a conveyance conveyor 50 so as to obtain a target weight value and supplies the articles M to the bag making/packaging machine 60. For example, the articles M are articles having variations in unit mass such as agricultural products, marine products, and processed foods.

The charge chute 2 is disposed below a conveying end 50a of the conveyance conveyor 50. The charge chute 2 receives the articles M dropping from the conveying end 50a of the conveyance conveyor 50, and discharges the articles M downward. The dispersion feeder 3 conveys the articles M supplied from above toward a peripheral edge. The dispersion feeder 3 is disposed below the charge chute 2. The dispersion feeder 3 conveys the articles M on a conveying surface 3a to the peripheral edge by vibration of an electromagnetic vibrator.

The plurality of radiation feeders 4 further conveys the articles M conveyed from the dispersion feeder 3 in a radial direction. The plurality of radiation feeders 4 is radially disposed along an outer edge of the conveying surface 3a of the dispersion feeder 3. The radiation feeder 4 has a trough 4a extending outward from below an outer edge of the conveying surface 3a. The radiation feeder 4 conveys the articles M by vibration of the electromagnetic vibrator.

The plurality of pool hoppers 5 is disposed to surround a center line CL in a vertical direction. Each pool hopper 5 is disposed below a distal end of the trough 4a of each radiation feeder 4. Each pool hopper 5 has a gate (supply gate) 5a allowed to be opened and closed. The gate 5a is located at a bottom of the pool hopper 5. Each pool hopper 5 temporarily stores the articles M discharged from the distal end of the corresponding trough 4a by closing the gate 5a. Each pool hopper 5 opens the gate 5a to discharge the temporarily stored articles M downward.

The plurality of weighing hoppers 6 is disposed to surround the center line CL. Each weighing hopper 6 is disposed below the gate 5a of each pool hopper 5. Each weighing hopper 6 has a main body 61 for accommodating the articles M and a gate 62 allowed to be opened and closed at a bottom thereof. The gate 62 is provided in the main body 61. The gate 62 is located at the bottom of the weighing hopper 6. By closing the gate 62, each weighing hopper 6 temporarily stores the articles M discharged from the corresponding pool hopper 5 in the main body 61. By opening the gate 62, each weighing hopper 6 discharges the articles M temporarily stored in the main body 61 downward.

The collecting chute 8 collects the articles M discharged from each weighing hopper 6 into a discharge port 8a. The discharge port 8a is located on the center line CL below the plurality of weighing hoppers 6. The collecting chute 8 has an upper chute part 81 and a lower chute part 82. The upper chute part 81 receives the articles M discharged from each weighing hopper 6 and slides the articles M toward the discharge port 8a side (that is, the center line CL side and the lower side). The lower chute part 82 is a truncated cone-shaped cylindrical body that tapers downward, and has an upper opening 82a and a lower opening 82b. The lower chute part 82 uses the lower opening 82b as the discharge port 8a and discharges the articles M downward from the discharge port 8a.

The timing hopper 9 is disposed below the discharge port 8a. The timing hopper 9 has a gate 9a allowed to be opened and closed. The gate 9a is located at a bottom of the timing hopper 9. The timing hopper 9 temporarily stores the articles M discharged from the collecting chute 8 by closing the gate 9a. The timing hopper 9 discharges the temporarily stored articles M to the bag making/packaging machine 60 by opening the gate 9a.

A weighing unit 11 is disposed in a case 13 supported on a frame 12. The weighing unit 11 has a plurality of load cells 11a. Each of the load cells 11a supports a corresponding weighing hopper 6. When the articles M are temporarily stored in each weighing hopper 6, the weighing unit 11 weighs (acquires) a weight value of each weighing hopper (weighing value according to the mass of the articles M).

The controller 20 is disposed in the case 13. The controller 20 includes a central processing unit (CPU), a read only memory (ROM), a random access memory (RAM), etc. The controller 20 controls an operation of each part of the combination weighing device 1 such as conveying operations of the dispersion feeder 3 and the radiation feeders 4, an opening/closing operation of the gate 5a of each pool hopper 5, an opening/closing operation of the gate 62 of each weighing hopper 6, and an opening/closing operation of the gate 9a of the timing hopper 9. The controller 20 is communicably connected to the bag making/packaging machine 60.

The controller 20 stores the weighing value weighed by the weighing unit 11 and the weighing hopper 6 that stores the articles M corresponding to the weighing value in association with each other. The controller 20 selects a combination of weighing values of the articles M from a plurality of weighing values of each article M weighed by the weighing unit 11 and associated with each weighing hopper 6 so that a total value becomes a target weighing value. More specifically, the controller 20 combines weighing values of the respective articles M output by each weighing unit 11 and selects a combination of the articles M such that a total combination value is close to the target weight value and falls within a predetermined range. That is, the controller 20 calculates a combination of the articles M equal to or close to a preset target weight value based on the weight value of each article M of the plurality of weighing hoppers 6 acquired by the weighing unit 11. Then, the controller 20 discharges the articles M from the weighing hopper 6 of the articles M related to the calculated combination. The interface 30 is a device that receives input of information from a user such as a worker.

Next, the controller 20 will be described in detail.

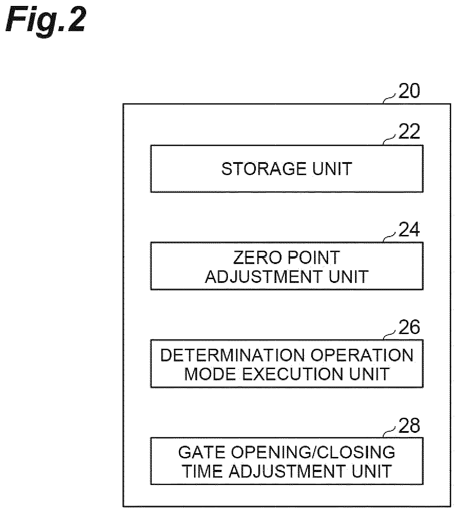

FIG. 2 is a diagram illustrating a functional configuration of the controller 20. As illustrated in FIG. 2, the controller 20 includes a storage unit 22, a zero point adjustment unit 24, a determination operation mode execution unit 26, and a gate opening/closing time adjustment unit 28. The controller 20 has the storage unit 22, the zero point adjustment unit 24, the determination operation mode execution unit 26, and the gate opening/closing time adjustment unit 28 as conceptual parts for executing various control processes. For example, such conceptual parts are configured as software in which a program stored in a ROM is loaded on a RAM and executed by a CPU.

The storage unit 22 stores information related to an operation of the combination weighing device 1. The storage unit 22 stores a weighing value weighed by the weighing unit 11 and a weight value of a zero point hopper. The zero point hopper is a weighing hopper 6 set as a target of zero point adjustment by the zero point adjustment unit 24. The storage unit 22 is capable of distinguishing between a weight value when the articles M are stored in the zero point hopper and a weight value after the articles M are discharged by opening and closing the gate 62. However, since not all the articles M in the zero point hopper are discharged by opening and closing the gate 62 once, each time the gate 62 of the zero point hopper is opened and closed, a weighing value before opening and closing and a weighing value after opening and closing are stored in the storage unit 22 in chronological order so that the weighing values can be distinguished.

The zero point adjustment unit 24 executes zero point adjustment. The zero point adjustment is, for example, a process of adjusting a zero point (reference weight) when the weighing hopper 6 is weighed in the weighing unit 11. Specifically, for example, the zero point adjustment unit 24 sets, as a zero point hopper, a weighing hopper 6, from which the articles M are discharged from previous zero point adjustment the number of times greater than or equal to a certain number of times, among the plurality of weighing hoppers 6. The zero point adjustment unit 24 discharges the articles M stored in the zero point hopper by opening and closing the gate 62 (hereinafter, also referred to as "discharge operation"). After executing the discharge operation, the zero point adjustment unit 24 stops opening and closing the gate 5a of the pool hopper 5 and prohibits supply of the articles M to the zero point hopper. The zero point adjustment unit 24 determines whether or not a weight value of the zero point hopper weighed in a state where supply of the articles M to the zero point hopper is prohibited exceeds a preset allowable range. The allowable range is a weight range in which it can be considered that the articles M do not remain in the zero point hopper. For example, the weight range is a weight range regarded as a tare weight obtained by adding a tare weight of the weighing hopper 6 when weighing is performed without supplying the articles M to the weighing hopper 6 at the start of operation, and an error expected by passage of time thereafter, for example, an error due to temperature drift generated in an amplification circuit of the weighing unit 11 or an error due to oil content of the articles M adhering to an inner surface of the weighing hopper 6. However, the error here is an example and is not limited thereto.

When a weight value of the zero point hopper weighed in a state where supply of the articles M to the zero point hopper is prohibited is within the allowable range, the zero point adjustment unit 24 sets the weight value of the zero point hopper as a zero point, and stores the weight value of the zero point hopper in the storage unit 22. By subtracting this zero point from the weighing value of the weighing hopper 6, the weight value of the articles M supplied to the weighing hopper 6 is calculated. When the weight value of the zero point hopper weighed in a state where supply of the articles M to the zero point hopper is prohibited exceeds the allowable range, that is, when the articles M remain without being discharged, the zero point adjustment unit 24 shifts to a determination operation mode by the determination operation mode execution unit 26 on the assumption that a zero point adjustment error has occurred.

The determination operation mode execution unit 26 executes the determination operation mode. The determination operation mode is a mode for determining a reason why the articles M are not discharged from the zero point hopper. The determination operation mode execution unit 26 further opens and closes the gate 62 (hereinafter also referred to as "error discharge operation") once or a plurality of times in the determination operation mode. When the weight value of the zero point hopper weighed by the weighing unit 11 falls within the allowable range as a result of performing the error discharge operation one or more times, the determination operation mode execution unit 26 determines that the opening/closing time of the gate 62 is inappropriate.

When it is determined that the opening/closing time of the gate 62 is inappropriate in the determination operation mode, the determination operation mode execution unit 26 stores a weight value of the zero point hopper after the error discharge operation (after further opening/closing of the gate 62) in the storage unit 22. When the gate 62 is opened and closed one or more times in the determination operation mode, the determination operation mode execution unit 26 stores the weight value of the zero point hopper in the storage unit 22 each time the error discharge operation is performed (each time the gate 62 is further opened/closed). In the determination operation mode, when the weight value of the zero point hopper does not fall within the allowable range even if the error discharge operation is repeated for a limit value (predetermined number of times), the determination operation mode execution unit 26 determines that the article M is attached to the zero point hopper. The limit value is not particularly limited, and may be, for example, 15 times.

The gate opening/closing time adjustment unit 28 adjusts the opening/closing time of the gate 62 based on weight values of a plurality of zero point hoppers stored in the storage unit 22. Specifically, when a ratio of weight values of zero point hoppers exceeding the allowable range to weight values of a stipulated number of zero point hoppers most recently stored is greater than or equal to a predetermined ratio, the gate opening/closing time adjustment unit 28 may estimate that the opening/closing time of the gate 62 is short, and the articles M cannot be completely removed from the weighing hopper 6, and thus increases a time of an open state (opening time) in opening/closing of the gate 62. The stipulated number here is not particularly limited, and is, for example, 100. The predetermined ratio is not particularly limited and is, for example, 1%.

When the opening time of the gate 62 is increased, the gate opening/closing time adjustment unit 28 also increases an opening time of the gate 5a of the pool hopper 5. When the number of weight values of zero point hoppers exceeding the allowable range is 0 among the weight values of the stipulated number of zero point hoppers most recently stored, the gate opening/closing time adjustment unit 28 decreases the opening time of the gate 62. The gate opening/closing time adjustment unit 28 uniformly adjusts the opening time of the gate 62 for all the weighing hoppers 6. The gate opening/closing time adjustment unit 28 uniformly adjusts the opening time of the gate 5a for all the pool hoppers 5.

Further, the controller 20 is configured such that ON (valid) and OFF (invalid) of the automatic adjustment mode (functional mode), in which the opening/closing time of the gate 62 is automatically adjusted by the gate opening/closing time adjustment unit 28, can be selected via, for example, the interface 30. The controller 20 is configured such that an operation mode (first mode) and an adjustment mode (second mode) in the automatic adjustment mode can be selected via, for example, the interface 30. When the operation mode is selected, the controller 20 prohibits decreasing the opening time of the gate 62. When the adjustment mode is selected, the controller 20 allows the opening time of the gate 62 to be decreased.

Next, processing by the controller 20 will be described in detail.

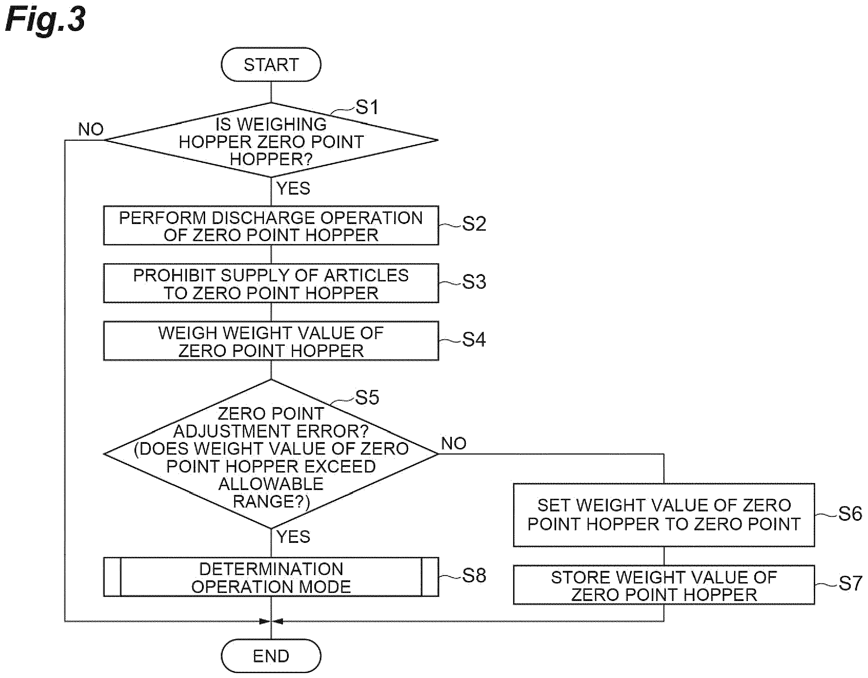

In the controller 20, for example, when the automatic adjustment mode is ON, the zero point adjustment unit 24 executes a next process related to zero point adjustment for each of the plurality of weighing hoppers 6. That is, as illustrated in FIG. 3, it is determined whether or not a target weighing hopper 6 is a zero point hopper (step S1). In the case of NO in step S1, the processing is terminated as it is, and then the determination in step S1 is performed again, for example, in a next process cycle.

In the case of YES in step S1, a discharge operation for opening and closing the gate 62 of the zero point hopper is performed, and the articles M stored in the zero point hopper are discharged to the outside of the zero point hopper (step S2). Opening and closing of the gate 5a of the pool hopper 5 disposed directly above the zero point hopper is suspended, and supply of the articles M to the zero point hopper is prohibited (step S3). The weight value of the zero point hopper is weighed by the weighing unit 11 in a state where supply of the articles M from the pool hopper 5 is prohibited (step S4). Based on the weight value of the zero point hopper weighed in step S4, it is determined whether or not a zero point adjustment error has occurred, that is, whether or not a weight value of the acquired zero point hopper exceeds the allowable range (step S5).

In the case of NO in step S5, the weight value of the zero point hopper weighed in step S4 is set as a zero point (step S6). The weight value of the zero point hopper weighed in step S4 is stored in the storage unit 22 (step S7). On the other hand, in the case of YES in step S5, the mode is shifted to the determination operation mode by the determination operation mode execution unit 26 (step S8). After step S7 or step S8, the process is terminated, and then the determination of step S1 is performed again, for example, in a next process cycle.

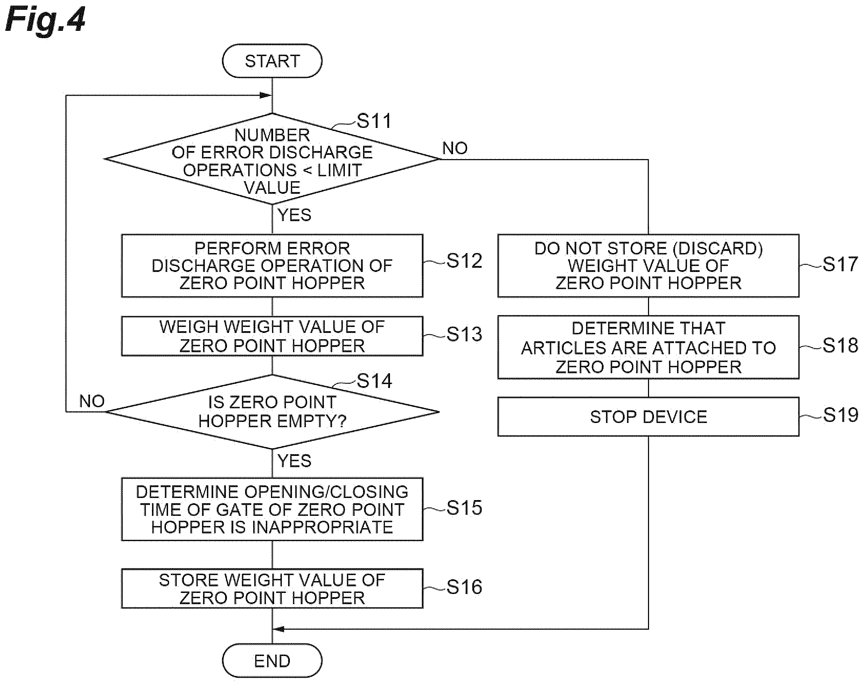

As illustrated in FIG. 4, in the determination operation mode by the determination operation mode execution unit 26, it is determined whether or not the number of error discharge operations of the zero point hopper is less than a limit value (step S11). In the case of YES in step S11, the error discharge operation of the zero point hopper is performed (step S12). The weight value of the zero point hopper is weighed by the weighing unit 11 (step S13). It is determined whether or not the zero point hopper is empty (step S14). In step S14, it is determined whether or not the weight value of the zero point hopper weighed in step S13 exceeds the allowable range, and when the weight value falls within the allowable range, it is determined that the zero point hopper is empty.

In the case of NO in step S14, the process returns to step S11. On the other hand, in the case of YES in step S14, it is determined that the opening/closing time of the gate 62 of the zero point hopper is inappropriate (step S15). The weight value of the zero point hopper weighed in step S12 is stored in the storage unit 22 (step S16). In step S16, when the error discharge operation is performed a plurality of times, each of weight values of zero point hoppers weighed in step S12 the plurality of times is stored in the storage unit 22.

In the case of NO in step S11, the weight value of the zero point hopper is discarded without being stored in the storage unit 22 (step S 17). It is determined that the articles M are attached to the zero point hopper (step S18). Then, assuming that an adhesion error has occurred, the combination weighing device 1 is stopped (step S19).

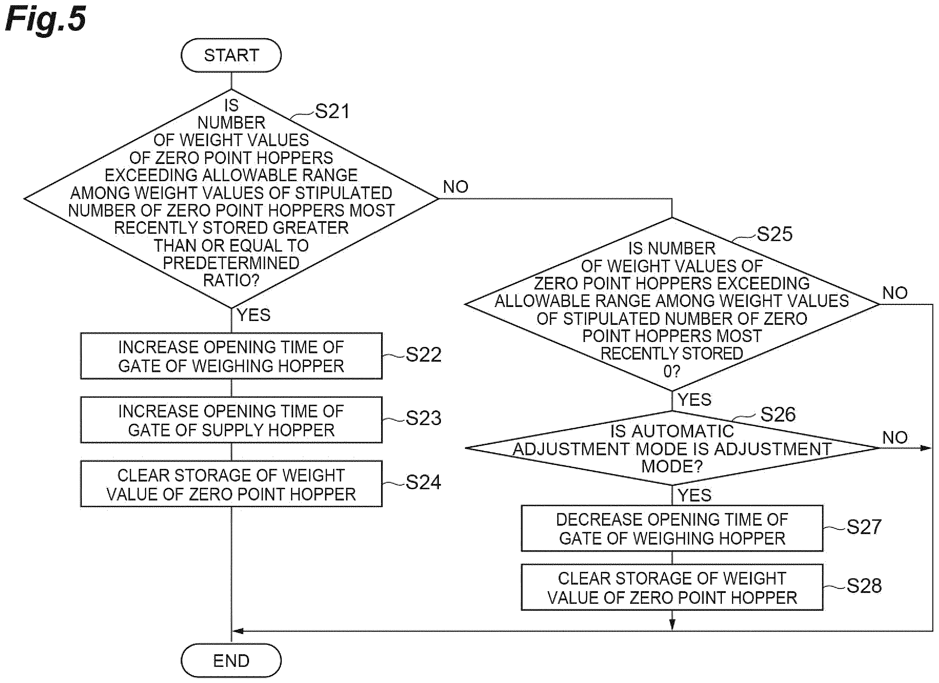

As illustrated in FIG. 5, in the gate opening/closing time adjustment unit 28, for example, when the number of weight values of the zero point hoppers stored in the storage unit 22 is a stipulated number or more, a subsequent process related to adjustment of the opening/closing time of the gate 62 is executed. That is, it is determined whether or not the number of weight values of zero point hoppers exceeding the allowable range among the weight values of the stipulated number of zero point hoppers most recently stored in the storage unit 22 is greater than or equal to a predetermined ratio (step S21). In the case of YES in step S21, the opening time of the gate 62 of the weighing hopper 6 is increased (step S22). In step S22, the opening time of the gate 62 is increased by, for example, 10 msec. The opening time of the gate 5a of the pool hopper 5 is increased (step S23). In step S23, the opening time of the gate 5a is increased by, for example, 10 msec. The weight values of the zero point hoppers stored in the storage unit 22 are cleared (all erased) (step S24).

In the case of NO in step S21, it is determined whether or not the number of weight values of zero point hoppers exceeding the allowable range among the weight values of the stipulated number of zero point hoppers most recently stored in the storage unit 22 is 0 (step S25). In the case of YES in step S25, it is determined whether or not the automatic adjustment mode is the adjustment mode (step S26). In the case of YES in step S26, the opening time of the gate 62 of the weighing hopper 6 is decreased (step S27). In step S27, the opening time of the gate 62 is decreased by, for example, 10 msec. In step S27, the opening time of the gate 5a of the pool hopper 5 is not decreased. All the weight values of the zero point hoppers stored in the storage unit 22 are erased and cleared (step S28). Then, after step S24, after step S28, in the case of NO in step S25 or in the case of NO in step S26, adjustment of the opening/closing time by the gate opening/closing time adjustment unit 28 is terminated.

As described above, in the combination weighing device 1, it is possible to execute the determination operation mode by using zero point adjustment performed during normal operation in order to adjust the zero point of the weight value of the weighing hopper 6, and to investigate a cause when the articles M remain in the weighing hopper 6. That is, when the weight value of the zero point hopper after opening and closing the gate 62 is within the allowable range, zero point adjustment is performed using the weight value as a zero point. However, if not (when the articles M remain in the zero point hopper), it is possible to shift to the determination operation mode and determine a cause of the articles M not being discharged from the zero point hopper. Therefore, it is possible to detect a reason why the articles are not discharged from the weighing hopper 6 while suppressing a decrease in an operating rate, and to adjust the opening/closing time of the weighing hopper 6 to an appropriate value based on the cause.

In the combination weighing device 1, when the weight value of the zero point hopper is within the allowable range by further opening and closing the gate 62 one or more times in the determination operation mode, the controller 20 determines that the opening/closing time of the gate 62 is inappropriate. In this case, since it is estimated that all the articles M in the zero point hopper are discharged by further opening and closing the gate 62, it is possible to detect that the opening/closing time of the gate 62 is inappropriate as the reason why the articles M are not discharged from the weighing hopper 6. A reason therefor is that, when the opening/closing time of the gate 62 is short with respect to the capacity of the articles M occupied in the weighing hopper 6, if the gate 62 of the weighing hopper 6 is further opened/closed, all the articles M in the weighing hopper 6 are discharged.

In the combination weighing device 1, when it is determined that the opening/closing time of the gate 62 is inappropriate in the determination operation mode, the controller 20 stores the weight value of the zero point hopper after further opening and closing of the gate 62, and adjusts the opening/closing time of the gate 62 based on the stored weight values of the plurality of zero point hoppers. As a result, it is possible to adjust the opening/closing time of the gate 62 after determining how many articles M are discharged from the zero point hopper each time by opening/closing of the gate 62.

In the combination weighing device 1, when the number of weight values of zero point hoppers exceeding the allowable range among the weight values of the stipulated number of zero point hoppers most recently stored in the storage unit 22 is greater than or equal to a predetermined ratio, the controller 20 increases the opening time of the gate 62. In this case, it is possible to adjust the opening/closing time of the gate 62 so that the articles are reliably discharged from the weighing hopper 6.

The combination weighing device 1 includes the pool hopper 5. In the case of increasing the opening time of the gate 62 of the zero point hopper, the controller 20 similarly increases the opening time of the gate 5a of the pool hopper 5. As a result, it is possible to adjust the opening/closing time of the gate 5a so that the articles M are reliably discharged from the pool hopper 5.

In the combination weighing device 1, even when the gate 62 is further opened and closed a predetermined number of times in the determination operation mode, if the weight value of the zero point hopper does not fall within the allowable range, the controller 20 determines that the articles M are attached to the zero point hopper. As a result, it is possible to detect attachment of the articles M to the weighing hopper 6 as a cause of the articles M not being discharged from the weighing hopper 6. A reason therefor is that, when the articles M are attached to the weighing hopper 6, even if the gate 62 of the weighing hopper 6 is opened and closed a predetermined number of times, the attached articles M are difficult to be discharged from the hopper.

In the combination weighing device 1, when the number of weight values of zero point hoppers exceeding the allowable range among the weight values of the stipulated number of zero point hoppers most recently stored is 0, the controller 20 decreases the opening time of the gate 62. In this case, even though the quantity (weight value) of the articles supplied to the zero point hopper before discharging the articles M is various in size, all the articles M are discharged within a time of a current open state. Thus, even when the opening time of the zero point hopper at that time is decreased, the opening/closing time of the gate 62 may be decreased by presuming that the articles M do not remain in the zero point hopper. It is possible to improve workability.

In the combination weighing device 1, the controller 20 is configured so that an operation mode and an adjustment mode are selectable as the automatic adjustment mode for adjusting the opening/closing time of the gate 62. When the operation mode is selected, decreasing the opening time of the gate 62 is prohibited, and when the adjustment mode is selected, decreasing the opening time of the gate 62 is allowed. As a result, it is possible to selectively perform a control operation in which only increasing the opening time of the gate 62 is allowed and a control operation in which increasing and decreasing the opening time of the gate 62 are allowed.

In the combination weighing device 1, it is possible to detect, using zero point adjustment, that articles M in a previous cycle remain in the weighing hopper 6 since the opening time of the gate 62 is short, and thus the articles M are difficult to come off from the weighing hopper 6. As a result, in the combination weighing device 1, the need for manual adjustment of the opening time of the gate 62 is eliminated. Since the minimum opening time of the gate 62 can be searched for, it is possible to reduce an unstable time of the weighing value and to expect improvement in the operation rate. While operating the combination weighing device 1, it is possible to detect a reason why the articles M are not discharged from the weighing hopper 6, and to adjust the combination weighing device 1 to an appropriate state based on the reason. Specifically, in zero point adjustment during normal operation, when the articles M remain in the weighing hopper 6, and thus zero point adjustment cannot be performed, a cause is investigated. When it is determined that the cause is due to the opening/closing time of the gate 62, the opening/closing time can be adjusted to an appropriate value.

Even though an aspect of the invention has been described above, the aspect of the invention is not limited to the embodiment.

In the embodiment, the plurality of pool hoppers 5 and weighing hoppers 6 are disposed in an annular shape. However, the invention is not limited thereto, and the plurality of pool hoppers 5 and weighing hoppers 6 may be disposed in a matrix. In the embodiment and modification, a plurality of booster hoppers may be included. In the embodiment and modification, some functions of the controller 20 may be executed by another controller or may be executed by a server that can communicate with the combination weighing device 1. In the embodiment and modification, an upper limit value may be set so that the opening time of the gate 62 does not become excessively long, and an increase in the opening time of the gate 62 may be limited. In the embodiment and modification, a lower limit value may be set so that the opening time of the gate 62 does not become excessively short, and a decrease in the opening time of the gate 62 may be limited.

According to the aspect of the invention, it is possible to provide a combination weighing device capable of detecting a cause of the articles not being discharged from the hopper during normal operation without switching to a test mode. As a result, for example, it becomes possible to automatically address the issue according to the detected cause.

## Claims

1. A combination weighing device comprising:
a plurality of hoppers each configured to store supplied articles with a gate in a temporarily closed state and then discharge the articles with the gate open;
an acquisition unit configured to acquire weight values of the hoppers; and
a controller configured to calculate a combination for a preset target weight value based on weight values related to the articles in respective weight values of the plurality of hoppers acquired by the acquisition unit,
wherein, after the articles stored in a zero point hopper set as a target of zero point adjustment among the plurality of hoppers are discharged by opening and closing the gate, when a weight value of the zero point hopper acquired in a state where supply of articles to the zero point hopper is prohibited is within a preset allowable range, the controller stores the weight value of the zero point hopper as a zero point, and when the weight value of the zero point hopper exceeds the allowable range, the controller shifts to a determination operation mode for determining a cause of the articles not being discharged from the zero point hopper.

2. The combination weighing device according to claim 1, wherein, when the weight value of the zero point hopper falls within the allowable range by opening and closing the gate one or more times in the determination operation mode, the controller determines that an opening/closing time of the gate is inappropriate.

3. The combination weighing device according to claim 2, wherein the controller:
stores the weight value of the zero point hopper after further opening/closing the gate when it is determined that the opening/closing time of the gate is inappropriate in the determination operation mode; and
adjusts the opening/closing time of the gate based on stored weight values of a plurality of zero point hoppers.

4. The combination weighing device according to claim 3, wherein, when the number of weight values of zero point hoppers exceeding the allowable range among weight values of a stipulated number of zero point hoppers most recently stored is greater than or equal to a predetermined ratio, the controller increases a time of an open state in opening and closing of the gate.

5. The combination weighing device according to claim 4, comprising a supply hopper configured to store the articles with a supply gate in a temporarily closed state and then supply the articles to the zero point hopper with the supply gate open,
wherein, when a time of an open state in opening and closing of the gate of the zero point hopper is increased, the controller increases a time of an open state in opening and closing of the supply gate of the supply hopper.

6. The combination weighing device according to any one of claims 2 to 5, wherein, when the weight value of the zero point hopper does not fall within the allowable range even when the gate is further opened and closed a predetermined number of times in the determination operation mode, the controller determines that the articles are attached to the zero point hopper.

7. The combination weighing device according to any one of claims 1 to 5, wherein, when the number of weight values of zero point hoppers exceeding the allowable range among the weight values of the stipulated number of zero point hoppers most recently stored is 0, the controller decreases a time of an open state in opening and closing of the gate.

8. The combination weighing device according to claim 7, wherein the controller:
is configured so that at least a first mode and a second mode are selectable as a functional mode for adjusting the opening/closing time of the gate; and
prohibits decreasing a time of an open state in opening and closing of the gate when the first mode is selected, and allows decreasing a time of an open state in opening and closing of the gate when the second mode is selected.
